# FASCICULE DE BREVET EUROPEEN

(11) **EP 0 586 460 B1**
(45) Date de publication et mention de la délivrance du brevet: **10.07.1996**
(21) Numéro de dépôt: 92910723.3
(22) Date de dépôt: 30.04.1992
(51) Int. Cl.: G01S 7/52

(54) **PROCEDE DE FORMATION D'UNE PLURALITE DE VOIES DE SONAR ET DISPOSITIF POUR LA MISE EN OEUVRE DUDIT PROCEDE**
Verfahren zur Bildung mehrerer Sonarstrahlen und Vorrichtung dazu
METHOD FOR FORMING A PLURALITY OF SONAR CHANNELS AND DEVICE FOR IMPLEMENTING SUCH METHOD

(30) Priorité: 28.05.1991 FR 9106390
(43) Date de publication de la demande: 16.03.1994
(73) Titulaire: THOMSON-CSF, 75008 Paris (FR)
(72) Inventeur: DEMEURE, Alain, F-92045 Paris-La Défense Cédex 67 (FR); GIACALONE, Jean-Pierre, F-92045 Paris-La Défense Cédex 67 (FR); ARDICHVILI, Emmanuel, F-92045 Paris-La Défense Cédex 67 (FR); DEL GALLO, Yannick, F-92045 Paris-La Défense Cédex 67 (FR); KOPP, Annie-Françoise, F-92045 Paris-La Défense Cédex 67 (FR)
(74) Mandataire: Desperrier, Jean-Louis
(86) Numéro de dépôt international: FR9200390
(87) Numéro de publication internationale: WO9221991

(56) Documents cités:
- EP-A- 0 007 864
- FR-A- 2 413 666
- GB-A- 2 013 446
- GB-A- 2 192 061

## Description

La présente invention se rapporte à la formation de voies dans un sonar par traitement numérique des signaux générés par des hydrophones.

Les hydrophones sont des capteurs acoustiques destinés à fonctionner dans l'eau et chaque hydrophone de l'antenne fournit un signal qui est fonction des ondes incidentes provenant du milieu dans lequel ladite antenne est immergée.

Il est connu de former des voies pour trouver la direction d'une onde incidente, chacune ces voies correspondant à une direction déterminée.

Avec des hydrophones régulièrement espacés d'une distance d et disposés selon une ligne formant un angle Ω avec le plan d'onde, une voie dans la direction donnée est obtenue en déphasant les signaux générés par les hydrophones.

Ce déphasage est réalisé en retardant le signal de chacun des hydrophones d'un retard rᵢ = d/c.sin Ω où c est la vitesse du son dans l'eau.

Généralement, la sommation de ces signaux s'effectue après une pondération par un coefficient multiplicateur afin d'abaisser les lobes secondaires du diagramme de directivité résultant.

Selon un procédé connu dans l'art antérieur, les signaux générés par les hydrophones sont échantillonnés à des instants fixes multiples de la période d'échantillonnage Tₑ. Le retard ne correspond pas forcément à un multiple de la période d'échantillonnage, et il est donc nécessaire de calculer la valeur du signal généré par l'hydrophone à un instant T₀ + rᵢ. Cette valeur est déterminée par un calcul d'interpolation à partir des signaux échantillonnés connus aux instants k.Tₑ.

Dans les dispositifs selon l'art antérieur décrits par exemple dans le document GB-A-2 192 061, on procède dans un premier temps à l'interpolation de tous les échantillons pour déterminer tous les échantillons avec les différents retards, puis, dans un deuxième temps, on calcule chacune des voies à partir des échantillons retardés avec le retard correspondant à la voie considérée.

Les étapes du calcul des voies sont donc les suivantes:
1 - Phase d'interpolations des signaux d'hydrophones Hᵢ
1.1- Calcul des échantillons du premier hydrophone avec les différents retards requis pour le calcul des voies
   - calcul des échantillons de l'hydrophone H₁ avec le retard fin r₁ et rangement en mémoire
   - calcul des échantillons de l'hydrophone H₁ avec le retard fin r₂ et rangement en mémoire
   et ainsi de suite pour chacun des retards rᵢ.
1.2 - Calcul des échantillons du second hydrophone avec les différents retards requis pour le calcul des voies
   - calcul des échantillons de l'hydrophone H₂ avec le retard fin r₁ et rangement en mémoire
   - calcul des échantillons de l'hydrophone H₂ avec le retard fin r₂ et rangement en mémoire
   et ainsi de suite pour chacun des retards rᵢ.
1.3 à 1.n idem pour chacun des hydrophones Hₙ
2 - Phase de formation des voies.
2.1 Formation de la voie 1
   - appel des échantillons correspondant au premier hydrophone H₁ avec le retard fin
   - sommation sur la première voie avec le retard grossier correspondant à un multiple de la fréquence d'échantillonnage et pondéré par le coefficient adéquat.
2.2 Formation de la voie 2
   - appel des échantillons correspondant au deuxième hydrophone H₂ avec le retard fin
   - sommation sur la deuxième voie avec le retard grossier correspondant à un multiple de la fréquence d'échantillonnage et pondéré par le coefficient adéquat.
2.3 à 2.v idem pour chacune des autres voies.

Cette méthode permet certes de constituer chacune des voies de façon satisfaisante, mais elle présente l'inconvénient de nécessiter une mémoire importante en raison du grand nombre d'échantillons à mémoriser.

On a également proposé dans l'art antérieur de procéder à une interpolation à la demande qui consiste à ne calculer que les échantillons interpolés dont on a besoin. Dans cette méthode, les phases de formation de voie et d'interpolation sont alternées.

Selon cette solution décrite par exemple dans le document EP-A-0 007 864, on procède à la formation complète d'une voie avant de passer à la voie suivante. Pour chacune des voies, on connait le retard fin qu'il faut calculer pour l'hydrophone en cours. Après le calcul d'interpolation pour un hydrophone, on procède à la sommation sur la voie en cours de détermination avant de procéder au calcul d'interpolation pour l'hydrophone suivant.

Ce procédé évite certes de mémoriser la totalité des échantillons interpolés. Toutefois, comme il est fréquent que plusieurs voies recourent au même retard, de nombreux calculs d'interpolation sont redondants, ce qui augmente le temps de traitement.

L'objet de la présente invention est de remédier à ces inconvénients en proposant un procédé de formation de voies permettant un traitement accéléré et nécessitant une mémoire moindre que pour la mise en oeuvre des procédés selon l'art antérieur.

A cet effet, l'invention consiste plus particulièrement à sommer pour chacune des voies les signaux échantillonnés délivrés par chacun des hydrophones Hᵢ à un instant T₀ + rᵢⱼ, rᵢⱼ désignant le retard applicable à l'hydrophone Hᵢ pour la formation de la voie Vⱼ, la valeur dudit signal échantillonné à l'instant T₀ + rᵢⱼ étant obtenue par interpolation à partir des échantillons connus du signal de l'hydrophone Hᵢ considéré et à procéder, après chaque calcul d'un échantillon par interpolation du signal délivré par un hydrophone Hᵢ pour un retard Rᵢ = rᵢⱼ, à la sommation dudit échantillon sur chacune des voies Vⱼ concernées par ledit retard Rᵢ avant de calculer l'échantillon suivant, puis on réitère cette opération de sommation pour les autres retards Rᵢ et ensuite on réitère ces opérations pour les autres hydrophones.

Le procédé selon l'invention consiste donc à former progressivement les voies en sommant après chaque interpolation le résultat sur celles des voies qui font appel au retard correspondant au calcul d'interpolation qui vient d'être effectué.

Selon un mode de réalisation particulier, on procède pour l'hydrophones H₁ à l'interpolation du signal avec un premier retard R₁, à la sommation du résultat sur chacune des voies Vᵢ concernées avec le coefficient de pondération adéquat et avec le retard grossier correspondant, ledit retard grossier correspondant à un multiple de la période de suréchantillonnage. On réitère ensuite cette opération pour chacun des autres retards Rᵢ , puis que l'on réitère ces opérations pour chacun des hydrophones Hᵢ jusqu'à la formation complète de chacune des voies.

La présente invention concerne également un dispositif pour la mise en oeuvre du procédé, comportant:
- une première unité de calcul reliée à des mémoires de stockage des résultats d'interpolation,
- une seconde unité de calcul commandée par un programme de commande du séquencement des transferts et des adresses des opérandes et des résultats
- un circuit d'interface distribuant les données dans les ressources du premier calculateur et assurant le transcodage des adresses,
- ainsi qu'une interface entrées/sorties.

Avantageusement, le premier calculateur est relié à une première mémoire vive contenant les coefficients définissant les retards fins et une deuxième mémoire vive contenant les échantillons à interpoler.

L'invention sera mieux comprise à la lecture de la description qui suit, faisant référence aux dessins annexés où :
- la figure 1 représente le synoptique du dispositif de formation des voies selon l'invention ;
- la figure 2 représente le diagramme des données pendant la phase d'interpolation ;
- la figure 3 représente le diagramme des données pendant la phase de formation des voies.

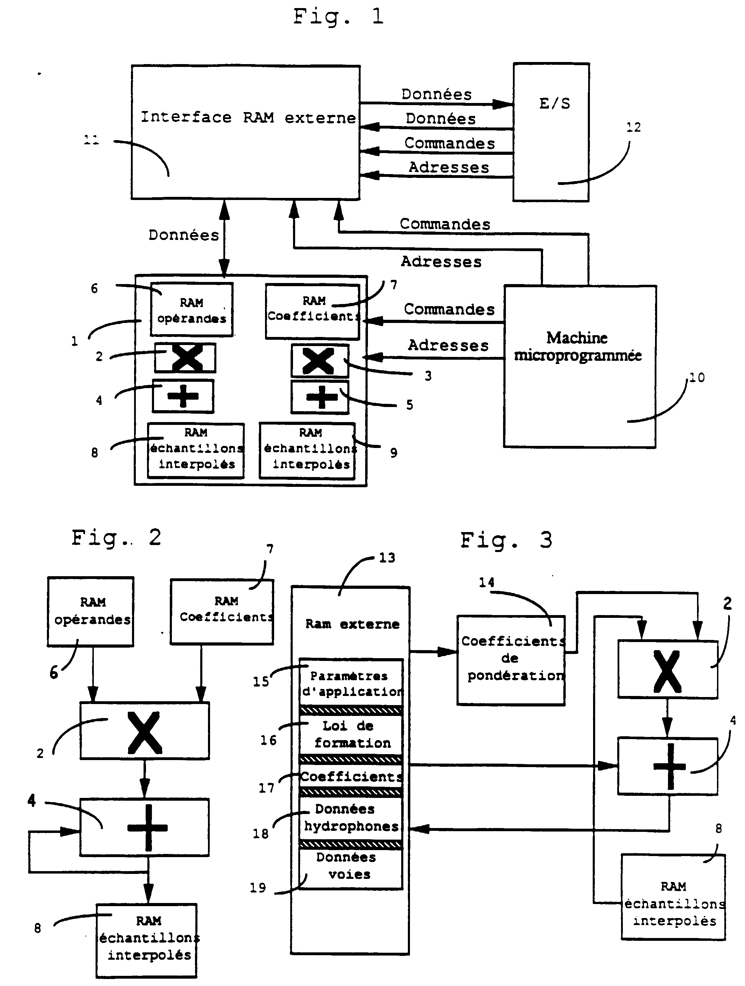

Le dispositif de traitement préféré des données pour la formation de voies tel que représenté sur la figure 1 comporte:
- un premier bloc (1) comportant un calculateur constituant la partie opérative où s'effectuent les calculs dans des ensembles multiplicateurs flottants (2), (3) et additionneur flottant (4), (5) en parallèle ainsi que des mémoires (6 à 9). La mémoire RAM (6) contient les opérandes, c'est-à-dire les échantillons à interpoler. La mémoire vive (7) contient les coefficients définissant les retards rᵢ, c'est-à-dire le reste de la division du retard par la période d'échantillonnage. Les mémoires vives (8) et (9) contiennent les résultats d'interpolation qui seront relus lors de la phase de formation des voies.
- un second bloc (10) constitué par une machine microprogrammée gérant par les bus les signaux de commandes du séquencement des transferts et la génération des adresses des opérandes et des résultats.
- un troisième bloc (11) constituant une interface avec les mémoires vives externes et distribuant les données dans les ressources du premier bloc (1), et assurant par ailleurs le transcodage des adresses.
- une interface (12) d'entrée et de sortie.

Dans l'exemple décrit, le premier bloc (1) comporte deux ensembles constitués chacun d'un multiplicateur flottant respectivement (2) et (3), d'un additionneur respectivement (4) et (5) et par les deux mémoires vives de stockage du résultats de l'interpolation respectivement (8) et (9). Les deux ensembles travaillent en parallèle.

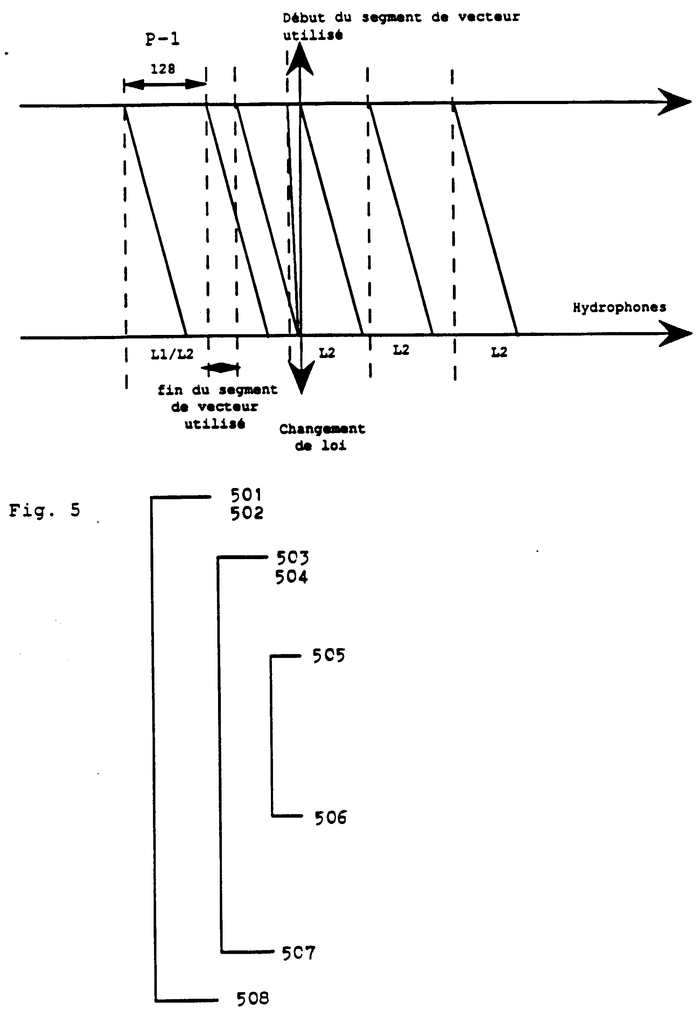

Pour expliquer le fonctionnement du dispositif selon l'invention, les figures 2 et 3 représentent le diagramme des signaux respectivement dans la phase d'interpolation et dans la phase de formation des voies.

Dans la phase d'interpolation représentée en figure 2, l'additionneur est rebouclé sur son entrée pour faire accumulation.

Dans la phase de formation des voies, la mémoire vive externe (13) fournit les échantillons de voies consommatrices du retard considéré par la phase d'interpolation en cours. Le retard grossier, multiple de la période d'échantillonnage, est fourni directement par l'adresse de lecture dans la mémoire vive externe (13). Le séquencement des opérations est assuré par la machine microprogrammée (10) qui envoie les adresses et les commandes d'une part au bloc (1) "partie opérative" et d'autre part à la mémoire vive externe (13). Une mémoire (14) contient les coefficients de pondération destinés à compenser les effets du lobe de réception.

La mémoire vive externe (13) est divisée en cinq zones (15) à (19) gérées par des pointeurs.

La première zone (15) "paramètres d'application" contient les variables nécessaires à l'exécution de l'application.

La seconde zone (16) "loi de formation" contient la structure des données décrivant l'application. Les informations qu'elle contient sont lues pendant la phase de déroulement de l'application. Elles déterminent l'ordre de priorité des tâches pour la mise en oeuvre du procédé selon l'invention.

La troisième zone (17) contient les coefficients nécessaires au calcul d'interpolation.

La quatrième zone (18) contient les échantillons du signal délivré par les hydrophones.

La dernière zone (19) contient les échantillons des voies en cours de formation.

Lors de la phase d'interpolation, les accès à la mémoire vive (13) se font dans les zones "données hydrophones" (18) et "coefficients" (17), tandis que dans la phase de formation des voies, les accès se font dans la zone (19) contenant les échantillons des voies en cours de formation.

La loi de formation peut s'exprimer comme suit:
pour l'hydrophone H₁:
   - interpolation des signaux de l'hydrophone H₁ avec le retard fin r₁
   - sommation du résultat sur la voie Vᵢ avec le retard grossier et le coefficient de pondération adéquat.
   - sommation du résultat sur la voie Vⱼ avec le retard grossier et le coefficient de pondération adéquat.
.pour l'hydrophone Hₙ:
   - interpolation des signaux de l'hydrophone H₁ avec le retard rᵢ
   - sommation du résultat sur la voie Vᵢ, avec le retard grossier et le coefficient de pondération adéquat.
   - sommation du résultat sur la voie Vⱼ, avec le retard grossier et le coefficient de pondération adéquat.
   - interpolation des signaux de l'hydrophone Hₙ avec le retard r₁
   - sommation du résultat sur la voie Vᵢ avec le retard grossier et le coefficient de pondération adéquat.
   - sommation du résultat sur la voie Vⱼ avec le retard grossier et le coefficient de pondération adéquat.
   - interpolation des signaux de l'hydrophone Hₙ avec le retard rᵢ
   - sommation du résultat sur la voie Vᵢ, avec le retard grossier et le coefficient de pondération adéquat.
   - sommation du résultat sur la voie Vⱼ, avec le retard grossier et le coefficient de pondération adéquat.

Lors de la formation des voies, on cherche à compenser les mouvements de l'antenne et à suivre une source mouvante.

La formation des voies stabilisées suppose que l'on change "au vol" les directions d'observation et donc la loi de formation.

Ce changement de loi doit s'effectuer d'une manière qui minimise les transitoires sur les voies formées: en effet, en toute rigueur, il faudrait lors du changement de loi attendre que tout le front d'onde incident ait balayé toute l'antenne regardant dans la nouvelle direction avant de reprendre le calcul. Dans le dispositif selon l'invention, on utilise les échantillons d'avant la date du changement pour constituer la voie pendant cette période transitoire Pendant cette durée, le calcul sera faussé, mais on aura le nombre correct d'échantillons d'hydrophones sommés sur chaque point de voie calculé.

Dans le dispositif selon l'invention, les calculs sont vectorisés, c'est-à-dire que les données relatives aux hydrophones sont envoyées vers la partie opérative sous forme de tableaux de 2ⁿ échantillons. On choisit par exemple n = 7, soit 128 échantillons. Chaque loi de formation s'applique donc à un vecteur de 128 échantillons pour tous les hydrophones qu'il faut impérativement finir de traiter pour avoir l'assurance que les voies sont complètement formées . Ces 128 échantillons sont pris dans la mémoire (8) contenant les signaux d'hydrophones interpolés. Pour le changement dynamique des lois de formation, comme les instants de changement ne se trouvent que rarement en coïncidence avec le début ou la fin d'un vecteur, il est indispensable que la loi de formation contienne les informations relatives au début du segment utilisé et à la fin du segment de vecteur utilisé: ce sont les adresses transmises à la mémoire vive (8) relatives aux signaux d'hydrophones interpolés.

La figure 4 représente sur une échelle temporelle les instants de prise d'échantillons d'hydrophones et les instant de sommation sur une voie qui subit un changement de loi de formation. Ainsi, le vecteur P - 1, est formé avec la loi L₁, le paquet P avec la loi de transition L₁/L₂ et le paquet P + 1 avec la loi L₂. Il peut y avoir plusieurs lois de transitions si le nouveau retard est supérieur à 128.

La vectorisation des calculs permet d'adopter une organisation des calculs en pipe-line et augmente le débit de calcul. De plus, cela permet une organisation des zones hydrophones (18) et données voies (19) dans la mémoire vive externe (13) en bancs parallèles permettant une bande passante -soit un nombre de mots par seconde par accès élevée. Avec une seule adresse, on lit et on adresse simultanément plusieurs valeurs.

Cette vectorisation permet aux calculs d'être menés sur des échantillons temporels successifs qu'ils concernent les hydrophones ou les voies, par incrémentation successive des adresses.

Par ailleurs, le fait que les échantillons d'hydrophones interpolés soient consommés immédiatement pour former les voies autorise une taille de mémoire vive interne limitée à la taille du vecteur, soit 128 x n bits de l'échantillon pour l'exemple décrit.

La loi de formation pour l'ensemble des vecteurs des 128 échantillons interpolés met en oeuvre les étapes suivantes représentées en figure 5.

En 501 on part d'un retard fin N°0.

En 502 on détermine le nombre d'hydrophones intéressés par ce retard fini.

En 503 on détermine le numéro du premier hydrophone.

En 504 on détermine le nombre de voies intéressées par cet hydrophone.

En 505 on calcule :
- un retard grossier
- le début du vecteur utile 0 << 127
- la fin du vecteur utile 0 << 127
- la pondération associée
- le numéro de la première voie

En 506 on calcule :
- un retard grossier
- le début du vecteur utile 0 << 127
- la fin du vecteur utile 0 << 127
- la pondération associée
- le numéro de la dernière voie.

En 507 on détermine le numéro du dernier hydrophone.

En 508 on arrive à un retard fin n° n.

La présente invention n'est bien sur pas limitée à l'exemple décrit, mais s'étend à toutes les variantes de réalisation.

## Revendications

1. Procédé de formation d'une pluralité de voies Vⱼ du type consistant à sommer pour chacune des voies les signaux échantillonnés délivrés par chacun des hydrophones Hᵢ à un instant T₀ + rᵢⱼ, rᵢⱼ désignant le retard applicable à l'hydrophone Hᵢ pour la formation de la voie Vⱼ, la valeur dudit signal échantillonné à l'instant T₀ + rᵢⱼ étant obtenue par interpolation à partir des échantillons connus du signal de l'hydrophone Hᵢ considéré, ledit procédé étant caractérisé en ce que, après chaque calcul d'un échantillon par interpolation du signal délivré par un hydrophone Hᵢ pour un retard Rᵢ = rᵢⱼ, on procède à la sommation dudit échantillon sur chacune des voies Vⱼ concernées par ledit retard Rᵢ avant de calculer l'échantillon suivant, puis on réitère cette opération de sommation pour les autres retards Rᵢ et ensuite on réitère ces opérations pour les autres hydrophones.

2. Procédé de formation d'une pluralité de voies selon la revendication 1, caractérisé en ce que l'on procède pour l'hydrophone H₁ à l'interpolation du signal avec un premier retard R₁, à la sommation du résultat sur chacune des voies Vᵢ concernées avec le coefficient de pondération adéquat et avec le retard grossier correspondant, ledit retard grossier correspondant à un multiple de la période de suréchantillonnage et que l'on réitère cette opération pour chacun des autres retards Rᵢ, puis que l'on réitère ces opérations pour chacun des hydrophones Hᵢ jusqu'à la formation complète de chacune des voies.

3. Procédé de formation d'une pluralité de voies selon l'une quelconque des revendications 1 ou 2 caractérisé en ce que les données générées par les hydrophones sont ecnantillonnées sous forme de tableaux de 2ⁿ échantillons, les calculs étant effectués sous forme vectorielle.

## Patentansprüche

1. Verfahren zur Bildung einer Mehrzahl von Kanälen Vⱼ, bei dem für jeden der Kanäle die von jedem der Hydrophone Hᵢ in einem Zeitpunkt T₀+rᵢⱼ gelieferten Tastproben summiert werden, wobei rᵢⱼ die auf das Hydrophon Hᵢ anwendbare Verzögerung für die Bildung des Kanals Vⱼ ist und der Wert des in einem Zeitpunkt T₀+rᵢⱼ getasteten Signals durch Interpolation ausgehend von bekannten Tastproben des betreffenden Hydrophonsignals Hᵢ erhalten wird, dadurch gekennzeichnet, daß nach jeder Berechnung einer Tastprobe durch Interpolation des von einem Hydrophon Hᵢ für eine Verzögerung Rᵢ = rᵢⱼ gelieferten Signals eine Summierung der Tastprobe auf jedem der durch diese Verzögerung Rᵢ betroffenen Kanäle Vⱼ vor der Berechnung der nächstfolgenden Tastprobe erfolgt und daß dann diese Summieroperation für die anderen Verzögerungen Rᵢ wiederholt wird und schließlich diese Operationen für die anderen Hydrophone wiederholt werden.

2. Verfahren zur Bildung einer Mehrzahl von Kanälen nach Anspruch 1, dadurch gekennzeichnet, daß man für das Hydrophon H₁ die Interpolation des Signals mit einer ersten Verzögerung R₁ und die Summierung des Ergebnisses auf jedem der betreffenden Kanäle Vᵢ mit dem geeigneten Gewichtungskoeffizienten und mit der entsprechenden Grobverzögerung durchführt, wobei die Grobverzögerung einem Vielfachen der Übertastungsperiode entspricht, und daß diese Operation für jede der anderen Verzögerungen Rᵢ wiederholt wird und schließlich diese Operationen für jedes der Hydrophone Hᵢ wiederholt werden, bis jeder der Kanäle vollständig gebildet ist.

3. Verfahren zur Bildung einer Mehrzahl von Kanälen nach einem beliebigen der Ansprüche 1 oder 2, dadurch gekennzeichnet, daß die von den Hydrophonen erzeugten Daten in Form von Tabellen mit 2ⁿ Tastproben getastet werden, worauf die Berechnungen in Vektorform durchgeführt werden.

## Claims

1. Method of forming a plurality of tracks Vⱼ of the type consisting, for each of the tracks, in summing the sampled signals delivered by each of the hydrophones Hᵢ at an instant T₀ + rᵢⱼ, rᵢⱼ designating the delay applicable to the hydrophone Hᵢ for forming the track Vⱼ, the value of the said sampled signal at the instant T₀ + rᵢⱼ being obtained by interpolation from the known samples of the signal from the hydrophone Hᵢ in question, the said method being characterized in that, after each calculation of a sample by interpolation of the signal delivered by a hydrophone Hᵢ for a delay Rᵢ = rᵢⱼ, the said sample is summed on each of the tracks Vⱼ concerned with the said delay Rᵢ, before calculating the following sample, then this summation operation is reiterated for the other delays Rᵢ, then these operations are reiterated for the other hydrophones.

2. Method of forming a plurality of tracks according to Claim 1, characterized in that for the hydrophone H₁, the signal is interpolated with a first delay R₁, the result is summed on each of the tracks Vᵢ concerned with the appropriate weighting coefficient and with the corresponding coarse delay, the said coarse delay corresponding to a multiple of the oversampling period and in that this operation is reiterated for each of the other delays Rᵢ, then in that these operations are reiterated for each of the hydrophones Hᵢ until each of the tracks is completely formed.

3. Method of forming a plurality of tracks according to either of Claims 1 and 2, characterized in that the data generated by the hydrophones are sampled in the form of tables of 2ⁿ samples, the calculations being carried out in vectorial form.
